# EUROPEAN PATENT APPLICATION

(11) **EP 4 559 691 A1**
(43) Date of publication of application: **28.05.2025**
(21) Application number: 24196712.4
(22) Date of filing: 27.08.2024
(51) Int. Cl.: B41J 11/00, G06F 3/12

(54) **MEDIA DEFORMATION PREDICTION INFORMED BY SIMULATION**

(30) Priority: 22.11.2023 EP 23211538
(71) Applicant: Canon Production Printing Holding B.V., 5914 HH Venlo (NL)
(72) Inventor: DRIESSEN, Tim, Venlo (NL); CORDERO, CRUZ, Jorge A., Venlo (NL); GIL, Laura I.R., Venlo (NL); BHATT, Nimitt C., Venlo (NL); LUIKEN, Jurriaan A., Venlo (NL)
(74) Representative: Canon Production Printing IP Department

(57) **Abstract**

Printer (1) and method for predicting media deformation at the end of a printing process due to an interaction of print medium and liquid like water-based marking liquid or coating liquid. The method comprises the steps of receiving a print job for a printer with a plurality of print heads (10), the print job determining types of liquid, a type of print medium and a printer configuration to be used, extracting liquid amounts for predetermined areas of at least one image taken from the print job, providing the extracted liquid amounts together with the types of liquid, the type of print medium and the printer configuration as input for a simulation tool, the simulation tool simulating the interaction by modelling physical phenomena defining said interaction such as absorption, evaporation and diffusion giving a moisture profile for the print job as output, a machine learning model receiving the moisture profile, the machine learning model trained with a training set of media deformation of test print jobs with a same printer configuration, a same type of ink and a same type of print medium, and the machine learning model predicting the media deformation of the print job.

## Description

### BACKGROUND OF THE INVENTION

### Field of the Invention

The present invention relates to a method for predicting media deformation at the end of a printing process due to an interaction of print medium and liquid like water-based marking liquid or coating liquid, The kind of media deformation may be any out-of-plane deformation, e.g. cockling, curl, waviness, etc. The media deformation may end up in an increased height of a printed sheet of the print medium orthogonal to a print surface of the printer executing the printing process. Such a media deformation may lead to a print head crash of the printer, i.e. the print head and/or the nozzles are touching the printed sheet somewhere in a paper path of the printer.

A print medium may be a form of hygroscopic media, e.g. paper, carton. The water based marking liquid may be a water-based ink. The coating liquid may be a primer.

A type of printer may also be referred as printer configuration.

### Description of Related Art

Nowadays there is a lack of a detailed understanding on the formation of deformation under influence of paper type, ink type and printer configuration. The current knowledge is inadequate to build a complete white-box model for simulating deformation.

On the other hand, the existing physics-based simulation models (white-box) are able to simulate only some aspect related to deformation, not all otherwise they become to slow have a high computational cost, and prevent in-line use cases.

A physics-based simulation model (white-box) is known, which simulates different features related to deformation (e.g. temperature and moisture content) over time as outcome, hereinafter referred to as moisture profile. However said existing physics-based simulation model is currently unable to simulate the deformation itself. A relation between said known physics-based simulation model outputs and paper deformation is not known adequately enough (on the level of physics equations) to create a complete white-box model for deformation.

### SUMMARY OF THE INVENTION

It is the object of the invention to specify a method for predicting media deformation at the end of a printing process due to an interaction of paper and water-based ink which method overcomes the problems mentioned here-above.

This object is achieved via a method according to the present invention, wherein the method comprises the steps of
a) receiving a print job for a printer with a plurality of print heads, the print job determining types of liquid, a type of print medium and a printer configuration to be used,
b) extracting liquid amounts for predetermined areas of at least one image taken from the print job,
c) providing the extracted liquid amounts together with the types of liquid, the type of print medium and the printer configuration as input for a simulation tool (SM),
d) the simulation tool (SM) simulating the interaction by modelling physical phenomena defining said interaction such as absorption, evaporation and diffusion giving a moisture profile for the print job as output,
e) a machine learning model (ML) receiving the moisture profile, the machine learning model (ML) trained with a training set of measured media deformation of test print jobs with a same printer configuration, same types of liquid and a same type of print medium, and
f) the machine learning model (ML) predicting the media deformation of the print job.

The proposed method continues on the basis of an existing white-box simulation tool and like the physics-based simulation model mentioned hereinabove or a fast surrogate model as replacement of physics-based simulation for computing the moisture profile as output and builds a black-box machine learning model on top thereof which is able to predict deformation. The simulation tool may also be called simulator or simulation model hereinafter.

When a print job is received is usually does not adhere to a grid pattern. Therefore according to an embodiment the method comprises the step of determining a grid-pattern print job which approximates the print job. The grid-pattern print job is then used for an approximate prediction.

The machine learning model is preferably trained outside of the print controller of the printer as training requires significant resources. The trained machine learning model is deployed on the print controller to make predictions. Making predictions with a trained machine learning model - called inference hereinafter - costs much less resources than training.

When using a physics-based simulation tool the simulations are preferably done outside of the print controller as the simulation requires significant resources. The simulations are done upfront and may be accessible via a look-up table reachable on the print controller. When using a fast surrogate model to approximate a moisture profile result, the surrogate model may also reside on the print controller and even be used in an in-line solution.

When a known or unknown media is introduced in the printer, the printer either in a first case fully automatically adjusts its settings without the user knowing or in a second case the user is in the loop.

In the first case changing a fixation temperature for example might influence other print quality aspects such as robustness. Therefore certain constraints are to be implemented here, e.g. no fixation temperature below 60 degrees Celsius or the like.

In the second case the user has to confirm changes or has to choose from a list of suggested options or may directly insert his own inputs to the machine learning model via a user interface of the machine earning model.

The method according to the present invention receives a print job, types of liquid, a print medium and a printer configuration as input and gives as output a deformation prediction. However, the simulation tool does not directly receive a print job as input. Instead it receives a single liquid amount in (g/m2) for each print head as input. In order to achieve this the following steps are executed. In a first step the print job given to the method as input is decomposed in tiles with uniform liquid amounts (g/m2) used for each tile for each colour and coating liquid like primer. In a second step, for each combination of liquid amounts of a tile, a simulation is executed given as input said liquid amounts, the types of liquid, the type of print medium, and the printer configuration. In a third step the simulation results for each tile are combined into the moisture profile to form a four-dimensional input. In a fourth step the machine learning model receives this four-dimensional result as input and is trained to use the input to predict the maximum deformation per tile.

The input for the simulation, i.e. the liquid amounts, the types of liquid, the type of print medium, and the printer configuration, is hereinafter also called the simulation configuration.

Besides a maximum deformation technically any statistic of the deformation inside a tile maybe computed, e.g. an average or a standard deviation.

During the training of the machine learning model, the model uses collected data to learn a relationship between said existing white-box simulation tool outputs and deformation. The trained machine learning model is able to make quick predictions, making it capable of being used in printers for in-line prediction and/or correction algorithms for deformation.

In order to train the machine learning model training samples are needed. A training sample consists of measured deformation of a print job printed for a specific printer configuration, liquid type, and print medium type.

The training samples may be continuously and automatically collected as printing occurs by the printer. Simultaneously specific print jobs adhering to the grid-pattern may be generated and printed. Both options require that a height camera is present which captures a height image after a fixation unit of the printer for fixating the printed liquid on the print medium. With the latter approach there is full control on the content of the print job, printer configuration, liquid types and print medium type. Based on how similar different simulation results are of different simulation configurations, simulation configurations may be selected such that a large region of the configuration space is covered with as little training samples as possible. In addition, by having control over the print job, print jobs may be generated which match the grid pattern design.

As the machine learning model receives processed and combined moisture profiles as input, the machine learning model operates independently of the specific choices of liquid amounts, printer configuration, liquid type and medium type. For example, if instead of Canon Red label paper, Black label paper is used, such a change will only be significant if it leads to a different interaction between the print medium and liquid at the end of the printing process and therefore different moisture profile outcomes of the simulation tool. A similar principle applies to the choice of liquid amounts, printer configuration and liquid types provided as input to the simulation tool.

According to an embodiment the method comprises the steps of creating the print job as an N by M grid of tiles, wherein each tile contains a uniform amount of liquid for each print head. The numbers N and M represent natural numbers greater than 1. By doing so, a single simulation by the existing white-box simulation tool is allowed to represent a tile in said N by M grid. By combining the simulation results with the created print jobs, the simulation results are embedded into the print jobs. For practical reasons an N by M grid is chosen. In this way the number M of columns can be varied independently from the number N of rows and vice versa. N may be chosen to be equal to M.

The printer is configured to print a digital print job in order to create a training dataset for the machine learning model. The printer is also configured to include a height camera in order to measure the amount of deformation of a printed sheet. The measured results are used to train the machine learning model.

According to an embodiment the machine learning model has a software and/or hardware architecture which is suitable for four-dimensional inputs and two-dimensional outputs. The four dimensions of the input are the number of tile rows, the number of tile columns, the number of timesteps, the number of features.

The number of features and the number of timesteps are not fixed. A trained machine learning model expects a certain number of features and timesteps. However different machine learning models can be trained with different amounts of features.

The features describe some aspect of the interaction between liquid and the print medium under the print conditions. A few examples are temperature, mass fraction of water and cosolvent, vapour mass concentration, partial pressure of vapor, absorbed water content, and surface tension.

The two dimensions of the output are the number of tile rows and the number of tile columns. An accuracy of the machine learning model and therefor of the prediction results may vary based on what kind of architecture is used. The output represents a statistic computed for every tile of the grid. However, the method according to the present invention is also suitable for an output in which more than one statistic is computed per tile, which would then result in a three dimensional output.

Besides a maximum, other common statistics are the median and standard deviation. Standard deviation might be the most common of the median and the standard deviation. The standard deviation relates to how dispersed the data is in relation to the mean.

The present invention also relates to a printer for printing print jobs on a print medium, the printer comprising a user interface and a print controller for storing the prediction results of the machine learning model achieved by a method according to the present invention, and an optimization tool for selecting a type of liquid, a type of print medium, a printer configuration, liquid amounts in non-printed areas and liquid amounts in printed areas which automatically or semi-automatically with user conformations via the user interface decreases a deformation of the print medium by judging and taking the stored prediction results of the machine learning model into account.

The type of liquid of each printhead is selected optionally since a printer may use only a single type of liquid for each printhead and thus it is not needed to optimize for different types of liquids.

According to an embodiment the user conformations are related to a user warning to consider a hold of the print job, an advice to change an ink amount in an appropriate area of an image of the print job, an advice to consider to use another type of liquid, another type of print medium, or another printer configuration.

Putting primer on non-printed areas helps to minimize deformation. As out-of-plane deformation is caused by uneven absorption and/or expansion of the material, putting a certain amount of primer on non-printed areas might help decrease the relative difference between neighbouring printed areas. The machine learning model may be used to assess what amount of primer for non-printed areas can be best used in the context of the current print job. E.g. for a certain non-printed tile in a print job as an N by M grid of tiles, a comparison in terms of predicted deformation can be made between jetting 0 g/m² primer and jetting 0.3 g/m² primer on the tile.

The same approach can be applied in the variation liquid amounts for printed areas with the key distinction that changes for printed areas may influence additional aspects of print quality besides deformation such as robustness and/or sharpness.

The present invention enables an automatic model based optimization approach within the printer for minimizing deformation. The machine learning model is able to predict deformation in a short time at a low computational cost. With this optimization approach the printer would be able, when given a paper type, liquid types and intended print job, to automatically adjust its printer configuration to the optimal settings in terms of having the least deformation on the printed result. Besides adjusting the printer configuration the method may also change the liquid amounts in non-printed areas, the liquid amounts in printed areas and the print medium. However some of these adjustments might require human confirmation for example via a user interface of the printer. For example, if a super heated steam temperature is automatically increased by 20 degrees Celsius and it has an impact on robustness, a confirmation from the user is needed. By applying the method according to the invention a need to conduct experiments by printing a large amount of sheets is largely decreased. In this way, resources are saved, and a more sustainable solution is provided than conducting experiments by printing a large amount of sheets.

Besides the automatic workflow, the machine learning model may also become directly accessible for customers and service technicians. With said access, customers could directly test different configurations and assess the predicted deformations. When a customer is for example in doubt whether to use paper type A or paper type B to print a print job, the machine learning model could indicate which paper type shows the least deformation for the used liquid types and printer.

In case a customer receives high deformation print results, a service technician may load in the paper type, liquid types and printer (with printer configuration), and use the machine learning model to assess how bad deformation results can be improved. By doing so, the service technician remotely helps the customer, preventing a service visit and providing a more sustainable solution.

The present invention also relates to a computer program comprising instructions which, when the program is executed by a computer, cause the computer to carry out the steps of the method according to the present invention.

### BRIEF DESCRIPTION OF THE DRAWINGS

Further features and advantages of the invention result from the claims and the following description of preferred embodiments, which are described using the accompanying drawings. Individual features of the embodiments and all combinations thereof, as well as in combination with individual features or feature groups of the preceding specification and/or in combination with individual features or feature groups of the claims with one another in any manner, are deemed disclosed.
Fig. 1 is a schematic depiction of a device for printing to a recording medium, according to an exemplary embodiment;
Fig. 2 is a diagram of a configuration of hardware and software components to be used for a training step in the method according to the present invention;
Fig. 3 is a diagram of a configuration of hardware and software components to be used for a inference step in the method according to the present invention;
Figs. 4 - 6 show an example of a print job design for an N by M grid of tiles according to the present invention;
Fig. 7 is a flow chart of an embodiment of a method according to the present invention; and
Fig. 8 is a schematically shown non-transitory software medium according to the present invention.

### DETAILED DESCRIPTION OF THE PREFERRED EMBODIMENTS

The present invention will now be described with reference to the accompanying drawings, wherein the same reference numerals have been used to identify the same or similar elements throughout the several views.

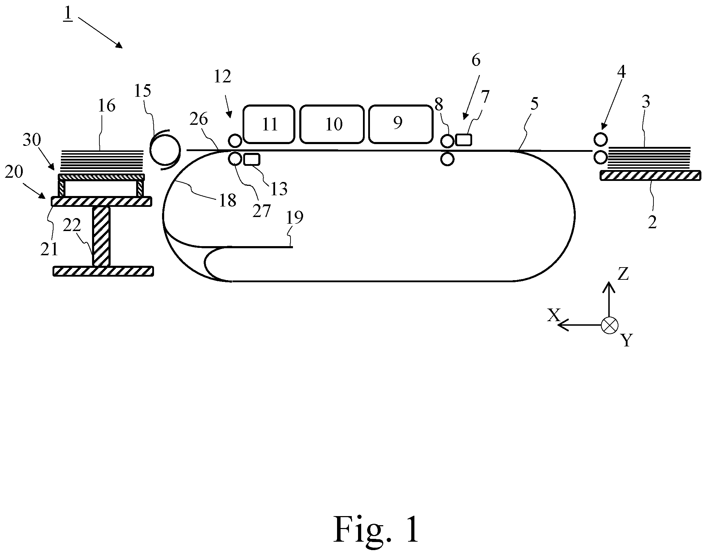

Fig. 1 illustrates a printer 1 according to the present invention. An input module 4 on the right side comprises one or more input stack supports 2 supporting at least one stack 3 of sheets. The stack supports may be pallets or print media trays. Individual sheets are separated from the stack 3 by the input module 4, which places the sheets on an input path of the printer 1. The input module 4 may comprise a separator to separate individual sheets from the stack 3. The input path brings the sheets to a print path section, illustrated as a straight, linear path, where the sheet is processed for printing thereon. The print path section comprises a switch 5 positioned at an intersection of the input path and a duplex path, which duplex path is arranged to return printed sheets to the print path. Sheets on the print path can thus be a mix of unprinted or one-side printed sheets.

The print path comprises a first registration unit 6 downstream of the switch 5. The first registration unit 6 comprises a first sheet detector 5 for detecting a position and orientation of each sheet. The orientation of the sheet is e.g. the angle of its forward facing or leading edge with respect to the transport direction X. Dependent on the measured position and orientation, the first registration unit 6 controls its registration drive 7 to position the sheet to a predefined position and/or align the sheet to a predefined orientation, for example with its leading edge perpendicular to the transport direction X, so that it will be parallel to the printhead assembly 10.

The registered sheet subsequently passes by a coater 9, which applies a liquid coating like primer on at least a portion of the treated surface. The coater 9 may for example comprise an array of printheads configured to jet droplets of coating liquid or comprise a roller for transferring coating liquid as the roller rolls over the sheet. Any suitable coating liquid may be applied, such as for example Canon ColorGrip. The coating liquid preferably forms a continuous coat on the sheet, which enables or improves the bonding of colour inks to the sheet.

The coated sheets travels to the printhead assembly 10, which jets one or more layers of colour inks onto the coated sheet. The printhead assembly 10 is preferably a page wide array of inkjet printheads to allow productive printing.

The jetted colour inks are then fixed onto the sheet by means of a fixation unit 11. The fixation unit 11 applies or removes energy from the sheet, so that the jetted colour inks undergo a phase change. The fixation unit 11 may comprise coolers and/or heaters, such radiation heaters with e.g. IR light, hot air blowers, such as impingement blowers, contact heaters, such a heated transport belt or drum, etc.

At the downstream side of the print path, a second registration unit 12 is provided to adjust the position and/or orientation of the sheets. This second registration unit 12 may be configured similar to the first registration unit 6. The second registration unit 12 can be applied to position and/or orientation a sheet with respect to a specific output location, for example a stacking location. In particular, the second registration unit 12 comprises a height camera for measuring a height of a printed sheet in order to detect deformation of the printed sheet. The second registration unit 12 comprises its own registration drive 27 and may comprise a sheet detector 13, or the sheet's position can be derived by tracking the sheet's movement after detection by the first sheet detector 7. The method of the present invention is indifferent to whether the height image is taken after the fixation unit 11 as shown in Fig. 1 or before the fixation unit in the neighbourhood of the first sheet detector 7.

At the end of the print path, a further switch 26 is provided to selectively direct sheets into the duplex path or to the output location. The duplex path preferably comprises a turn station 19, which inverts the sheet, so that it leaves the duplex path with its unprinted side eventually facing the printhead assembly 10. The output location in Fig. 1 comprises a stacker 20, which gathers the printed sheets in a further stack 16 on a pallet 30 on a pallet support 21. The stacker 20 comprises a stacking unit 15, which receives printed sheets and positions these on top of another into the stack 16. The stacking unit 15 may in one example comprise a rotatable flipping wheel with one or more slots at its circumference for holding a leading edge of a sheet. By rotating the flipping wheel as it holds the sheet, the sheet is flipped, and then released from the slots as the leading edge of the sheet contacts a stop at the bottom side of the flipping wheel. The pallet support 21 of the stacker 20 is provided on a lift 22, so that its position in the vertical direction Z can be adjusted. This allows the top of the stack 16 to be at the working level of the stacking unit 15 as the stack height increases. The pallet support 21 is configured for supporting a pallet 30, though in case of absence of a pallet it may be suited for directly stacking sheets thereon as well.

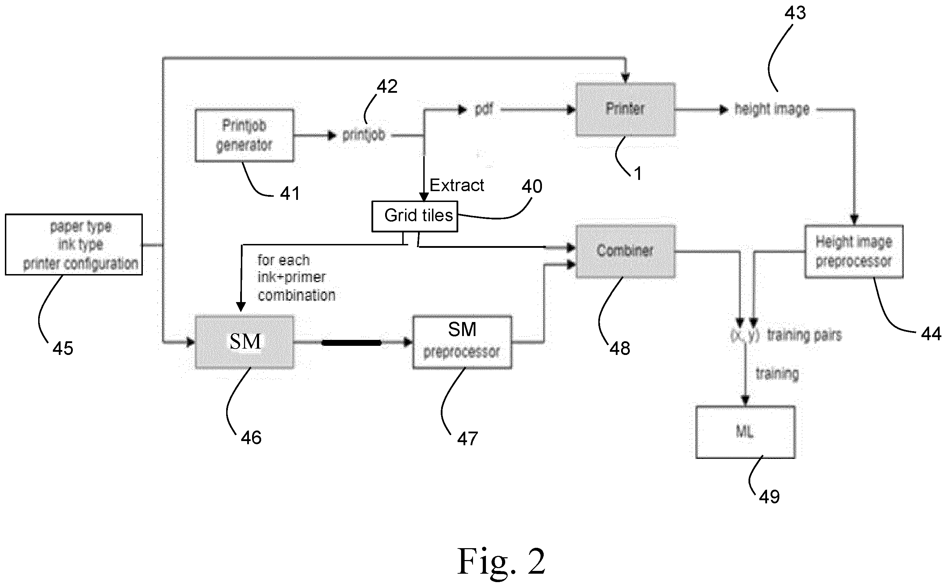

Fig. 2 is a schematic depiction of an example of a configuration of hardware and software components to be used in training phase of the machine learning model according to the present invention.

By means of a user interface of the printer 1, which may be local or remote, wired or wireless, at least three parameter values 45 are entered in the print controller of printer 1.

The same at least three parameter values 45 are entered in the simulation model SM 46. The at least three parameters concern the type of print medium, for example paper, the type of liquid e.g. ink or primer, and the configuration of the printer. The printer controller 48 adapt the printer 1 to have the printer configuration of the at least three parameter values 45.

A print job generator 41 may create a print job 42 which is delivered to the printer for example as a pdf file. Alternatively the print job 42 may be received by the print controller by means of a digital network to which the printer 1 is connected. The print job 42 is created as an N by M grid of tiles 40, wherein each tile contains a uniform amount of liquid. This property allows a single simulation to represent a tile in said N by M grid. As such the (processed) simulation results can be embedded for each tile, retaining its position in the grid, as is done by a combiner 48. The digital print job 42 is printed in order to create a training dataset for the machine learning model ML 49.

From the print job 42 the grid tiles 40 are extracted for each combination of liquids. The grid tiles 40 are input for the simulation model 46 and for the combiner 48.

In this example print jobs are generated for a N by M grid as pdf and additionally a text file containing the amount of ink % for each tile. For example the text file contains the following data:
0 0 25 75
50 25 75 0
0 50 75 100
75 100 75 50

(Here the left top contains 0% of ink, and the right bottom contains 50% of ink).

The amounts in the text file are the amounts of ink for one of the print heads. In the simulation more than one print head may be present in the printer 1, for example to jet primer, yellow ink, magenta ink, cyan ink, and black ink, for each of which we can specific a liquid amount. A tile could also contain 50% magenta, 25% cyan and 25% primer. A single simulation can be executed for 50% magenta, 25% cyan and 25% primer.

The simulator model SM 46 receives a unit g/m² as inputs. Therefore the liquid percentages need to be translated. E.g. 50% = 6 g/m².

The simulation model SM 46 is activated and delivers a simulation result file, for example a csv file, to a preprocessor 47 of the simulation model SM 46. The preprocessor works up and simplifies the simulation result file and sends the worked up simulation result file to the combiner 48.

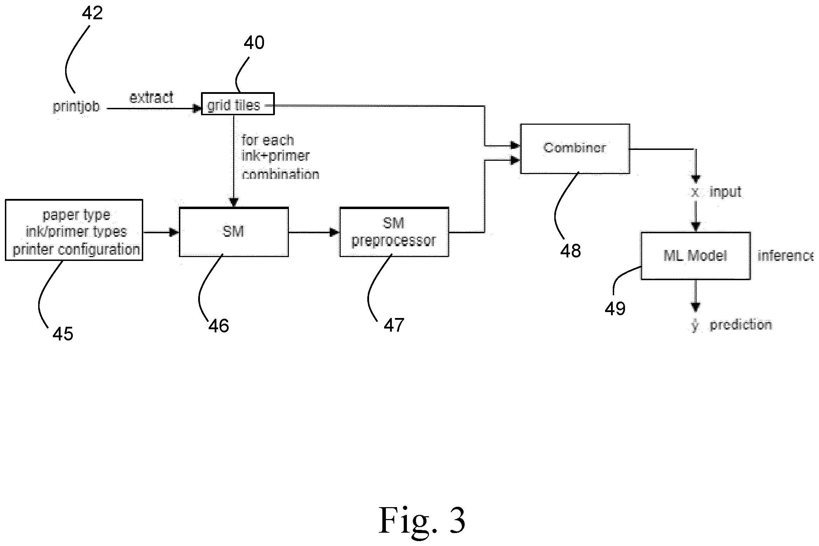

The combiner 48 is a piece of software code which resides on the print controller of the printer 1 when using the trained machine learning model 49 for doing predictions in the inference phase as shown in Fig. 3. The combiner combines the output of the simulation prep-processor 47 with the grid tiles 40.

The printer 1 is printing the pdf file. The printed pdf file is scanned by the height camera 12 (See Fig. 1) which delivers a height map 43 to the height image preprocessor 44 which may be installed in the print controller. However, the height map 43 is only needed in the training phase of the machine learning model ML 49. Training of the machine learning model ML 49 may happen outside of the print controller. Therefore the height image preprocessor 44 may also be installed outside of the print controller of the printer 1. The height image preprocessor 44 pre-processes the height map 43 and forms together with the simulation-result-injected-print job an (input, output) pair (x, y) used for training the machine learning model ML 49. The height image pre-processor 44 takes some statistics from the raw height image 43, which form the target values to be predicted by the machine learning model ML 49.

The combiner 48 sends the text file received from the print job generator 41 to the machine learning model ML 49. The input for the machine learning model ML 49 consist of training pairs (x,y) which encode the result x file from the combiner 48 and the pre-processed height map y. The machine learning model ML 49 is trained by the training pairs (x,y) which are the input-output training pair. For this 4-dimensional input coming from the combiner 48, actually the print job 42 is printed and the result is measured. This pre-processed result coming from the height image preprocessor 44 form the two-dimensional output, which is the ground-truth. The machine learning model ML 49 is trained to predict said y as best as possible when given the input x.

The training may happen as follows. The x is presented as input to the machine learning model ML 49 which produces a prediction referred to as ŷ. It is calculated how much ŷ deviates from the actual ground truth y, i.e. (y - 9). Based on said difference it is calculated how parameters of the machine learning model ML 49 should be changed to make the difference (y - ŷ) smaller.

After training, the result is a trained model. Now an input x is provided to the machine learning model ML 49 which produces a prediction ŷ without a need for printing. Said prediction is now trusted to be correct to a certain extend since there is no measured deformation result anymore. The usage of a trained model to do predictions is called inference.

The architecture of the machine learning model ML 49 can handle a 4 dimensional input and produce a 2 dimensional output. According to the present invention the machine learning model ML 49 is able to predict unseen combinations of the four input values.

The used liquid amounts, type of print medium, liquid types, and printer configuration are used by the simulation model SM 46 to simulate a moisture profile. Said moisture profile provides adequate information for the machine learning model ML 49 to be able to predict deformation. The moisture profile provides an encoding in which similarities between different liquid amounts, print media, liquid types, and printer configurations can be assessed by the machine learning model ML 49 based on the difference in interaction between aforementioned. With a more simplistic encoding, where e.g. the paper types are considered as nominal features, a trained machine learning model ML 49 would be unable to leverage the information from seen paper types, such as "Canon Black Label" and "Canon Red Label", to interpolate and accurately predict the deformation for an unseen paper type "Canon Yellow Label".

To achieve such informatic encoding of the inputs, the simulator SM 46 is preferably a physics-based simulation model (white-box) or a surrogate model thereof, which simulates different time-series features related to deformation (e.g. temperature and moisture content overtime). By using these moisture profile from the simulator SM 46in the input of the machine learning model ML 49, the knowledge embedded into the white-box model is utilized. The simulator SM 46 takes as input the type of print medium, the liquid type, the printer configuration and the amounts of liquid used for each print head (in g/m²).

The inputs of the type of print medium and the liquid type may be given in terms of so-called 'material files' holding various mechanical properties of the print medium or the liquid. The printer configuration may be given in terms of a specification of the modules of the printer with the amount of time spent in each (sub-)module together with various properties of this (sub-)module.

In normal circumstances the simulator SM 46 simulates a single point of the print medium, given as the amounts of liquid in g/m² for each print head printed for said point. In a single print job 42 this would result in an infeasible amount of simulations. To constrain the amount of simulations, the inventors observed that if a patch is printed with uniform amounts of liquid (g/m²) for each print head, a single simulation by the simulator SM 46 can be used to represent the entire patch. This way of working motivates the creation of the print jobs 42 as a N by M grid consisting of tiles with each tile contains uniform amounts of liquid for each print head (in g/m²).

Fig. 3 is a schematic depiction of an example of a configuration of hardware and software components to be used in the steps of inference of the machine learning model according to the present invention. Once the machine learning model ML 49 is trained, the inference phase starts in which the machine learning model ML 49 starts to predict the amount of deformation for print jobs 42 received by the printer 1. The parameter values 45 for print medium type, liquid type(s) and printer configuration are known to the print controller of printer 1 and entered as input in the simulation model SM 46.

From the print job 42 grid tiles 40 are extracted as already described. For each liquid combination the grid tile is sent to the simulation model SM 46.

The simulation model SM 46 is activated and delivers a simulation result file, for example a csv file, to a preprocessor 47 of the simulation model SM 46. The preprocessor works up and simplifies the simulation result file and sends the worked up simulation result file to the combiner 48.

The combiner 48 also receives the grid tiles 40. The combiner 48 is a piece of code which would reside on the print controller when using the trained machine learning model ML 49 for doing predictions in the inference phase.

The combiner 48 combines the grid tiles 40 with the simulation result file in order to create input for the machine learning model ML 49 in its inference phase. The machine learning model ML 49 delivers as output a prediction referred to as ŷ without a need for printing.

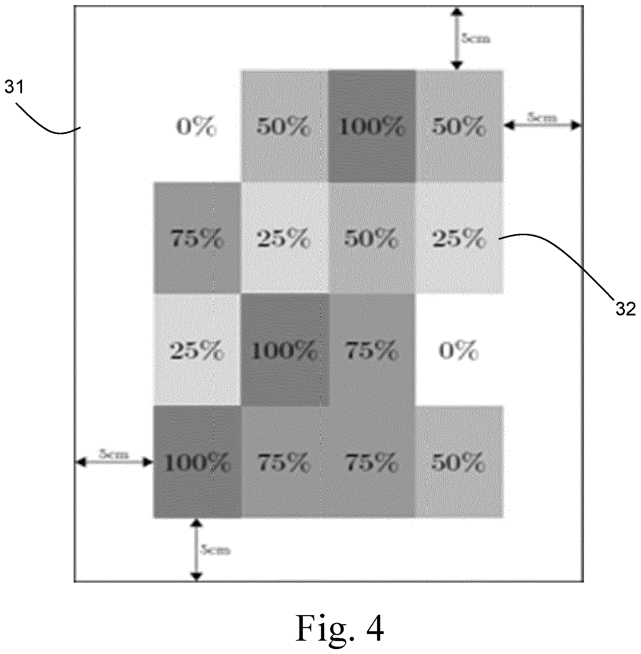

Figs. 4 - 6 show examples of the steps of a print job design for an N by M grid of tiles according to the present invention.

Fig. 4 shows an example of a print job design 31 for a 4 by 4 grid of tiles 32. Voor de size of the tiles (in cm) there are particular requirements. Tiles may be perfect square or rectangular. The 4 by 4 grid in this example may be half as large or up to edges of the paper. Important is that in the height image also a same grid pattern with the same tile sizes can be placed in order to calculate correct statistics for each tile.

The number of 4 x 4 = 16 tiles is used in this example. However, other numbers of tiles may be used, for example 100 by 100, to achieve more details in the predicted deformation. However, in latter case more training data is needed and the more precise the target is, the more difficult the task of the machine learning model ML 49 becomes. For the example SRA3 sheets are used with a 5 cm white margin all around. However, the margin may be zero when printing all the way up to the edges of the sheets. Each tile contains a uniform amount of ink of either 0%, 25%, 50%, 75%, or 100% of ink, for example magenta ink. In this example only magenta ink is used. A number of fixed ink amounts are chosen, for each ink amount a simulation is run and print jobs 42 consists of combinations of these ink amounts.

Adhering to the print job design 31 a large amount of print jobs 42 are generated (for example a few thousand) for the training set. The print jobs 42 may result from completely random generation, random generation with a higher chance of 0% magenta tiles (to boost the generation of more extreme print jobs with larger differences in ink between neighbouring tiles), manual patterns and/or manual patterns with some random variations.

To combine a print job 42 with the simulation data, a single simulation is run for each magenta ink amount (0%, 25%, 50%, 75%, 100%). The raw moisture profile are pre-processed by the pre-processor 47 shown in Fig. 2 and injected onto each grid tile 32.

Each pre-processed simulation result is a two-dimensional tensor defined by a predetermined number of timesteps and a predetermined number of features. In this example there are 301 timesteps and 46 features). Injecting such a two-dimensional tensor for each grid tile 32 yields a four-dimensional tensor result of shape comprising a number of tile rows, a number of tile columns, a number of timesteps and a number of features, for example (4, 4, 301, 46). The four-dimensional tensor forms the four-dimensional input for the machine learning model ML 49.

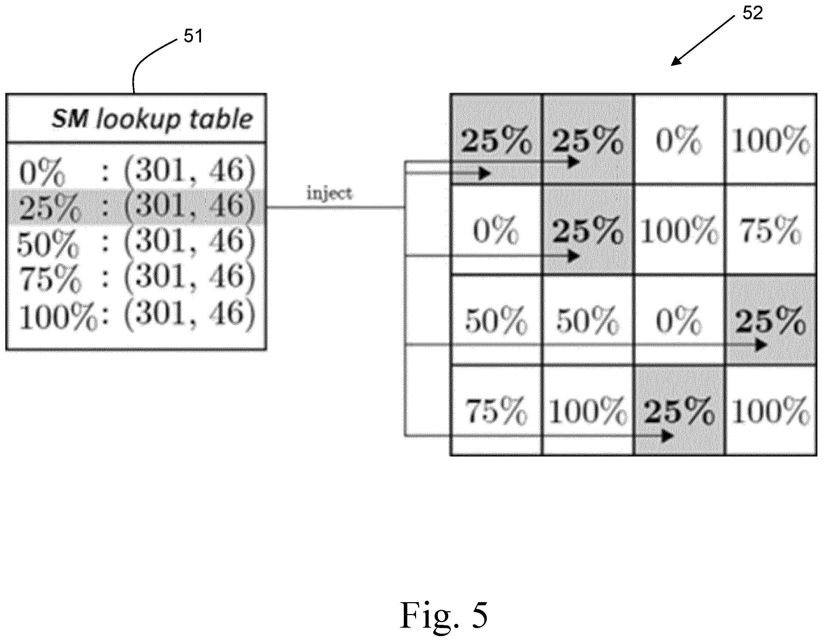

Fig. 5 shows an example of the injection of pre-processed moisture profile into a 4 by 4 print job. The simulations are run by the simulator SM 46 beforehand and are used as a look up table 51 to form the inputs 52 for the machine learning model ML 49. Because the simulations are run beforehand, the simulations do not hamper the opportunity of the machine learning model ML 49 to be used for in-line prediction and/or correction algorithms for deformation.

For the training set, the print jobs 42 are printed with the same liquid amounts per print head, the same type of print medium, the same liquid type and the same printer configuration choice as used in the simulations by the simulator SM 46. By doing so, the machine learning model ML 49 is trained to relate the moisture profile to the printed, measured and processed deformation result obtained from the height image pre-processor 44 shown in Fig. 2 by using the same settings.

The printed deformation results are measured using the inline height camera 12 of the printer 1. The raw height image 43 contains for every pixel the measured height. After preprocessing of the raw height image 43 by the height image pre-processor 44 the target output y shown in Fig. 2 is created which the machine learning model ML 49 tries to predict.

The simulator SM 46 simulates various features describing the interaction between print medium and ink under influence of the printer configuration. The features are defined across time and depth (of the print medium). For features defined across depth of the print several statistic such as medium, maximum and standard deviation may be computed for each timestep to limit the size of the pre-processed simulation output.

Features are provided in different magnitudes. E.g., some features may range from [0, 0.1] while others are in the range of [0, 140]. To enable the machine learning model ML 49 to learn optimal network weights despite these varying scales, the simulation results may be normalized to fall within a uniform range of [0, 1].

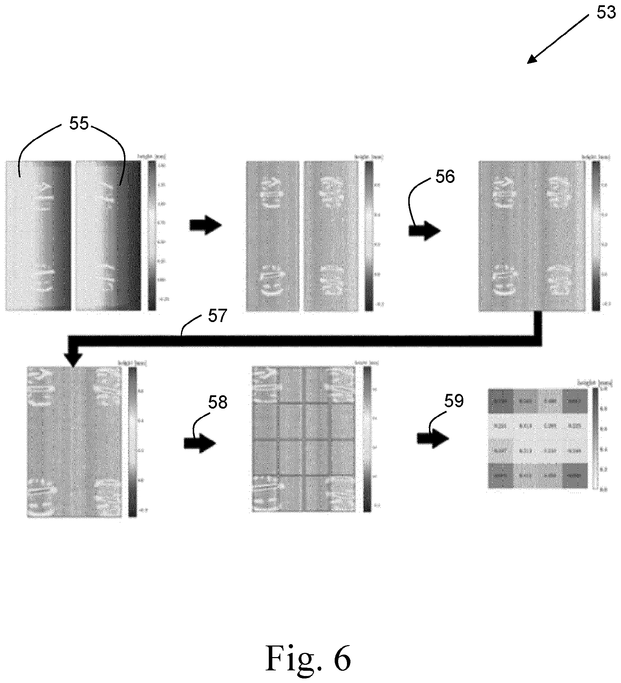

Fig. 6 shows an example of processing 53 of the height images 43 shown in Fig. 2. The height camera 12 may take two height images 55 of a single sheet. The two height images 55 may be glued 56 together and certain filtering 57 may happen, e.g. to cut out a print belt of the height image by means of software, e.g. to provide a white margin around the tiles, e.g. a pre-processing script. An N by M grid is 58 placed over the glued 56 height images and one or more statistics are 59 computed for each tile (Fig. 6 shows only one statistic, the maximum value, computed).

In general the height image contains a height value for every pixel. Predicting a deformation value for every pixel may be a difficult task for the machine learning model ML 49 and would require a vast amount of training data. To make the prediction task easier, the inventors have applied the N by M grid on the height image 43 and compute for each grid-tile 32 a maximum deformation in this tile 32 (4 by 4 grid in the pre-processing example shown in Fig. 3). Instead of or besides taking a maximum value, also statistics like standard deviation and average may be computed and predicted.

In the examples of Figs. 4 - 6 not all four inputs are varied for convenience reasons. However, according to the present invention, generally the machine learning model ML 49 is able to learn a relationship from the moisture profile to tile-wise deformation prediction where all inputs are varied.

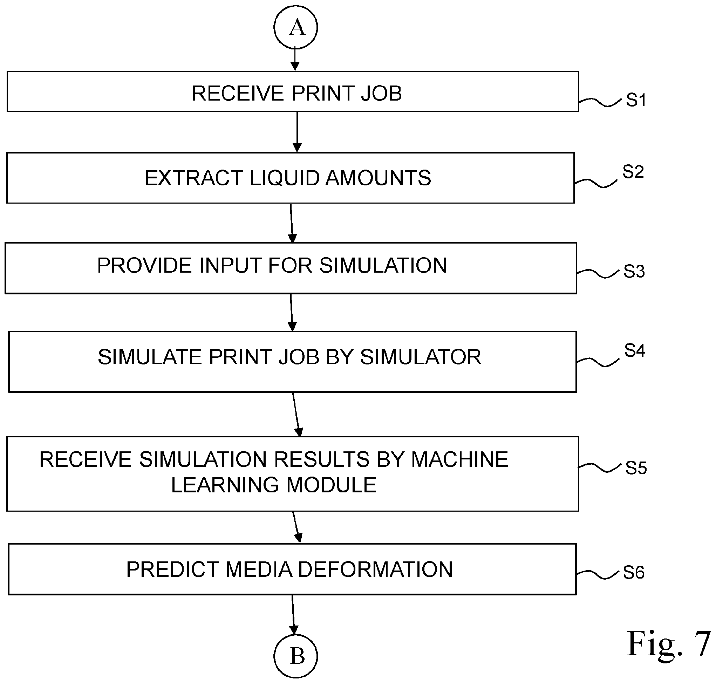

Fig. 7 is a flow chart of a method for predicting media deformation at the end of a printing process due to an interaction of print medium and liquids according to an exemplary embodiment.

The method may in particular be implemented with the printer 1 according to Fig. 1. The method is started in a starting point A which leads to a first step S1.

In the first step S1 a print job is received for a printer with a plurality of print heads. The print job determines types of liquid, a type of print medium and a printer configuration to be used. Said information in the print job is pre-processed before is in a shape as input for the simulator SM 46 as described hereinabove.

In a second step S2 liquid amounts are extracted for predetermined areas of at least one image taken from the print job. The predetermined areas of the at least one image may form grid tiles as explained hereinabove. When a normal print job is received by the printer, the print job does not have to adhere to the grid pattern which is present in the test print job to train the machine learning model ML 49 for example, and no text file with liquid percentages is provided. Therefore a grid-pattern print job is created which approximates the normal print job. The created grid-pattern print job is used for an approximate prediction.

In a third step S3 the extracted liquid amounts are provided together with the types of liquid, the type of print medium and the printer configuration as input for the simulation model SM 46.

In a fourth step S4 the simulation tool SM 46 simulates the interaction by modelling physical phenomena defining said interaction such as absorption, evaporation and diffusion giving a moisture profile for the print job as output.

In a fifth step S5 the machine learning model ML 49 receives the combined simulation results, i.e. the moisture profile. The machine learning model ML 49 is trained beforehand with a training set of media deformation of test print jobs with a same printer configuration, same types of liquids and a same type of print medium.

In a sixth step S6 the machine learning model ML 49 predicts the media deformation of the print job. The prediction takes place before printing of the print job. By doing so, the user of the printer can be warned or advised how to proceed, in case that an unacceptable amount of deformation is predicted by the machine learning model ML 49. On the other hand the printer itself may automatically take some internal measures to avoid the predicted deformation.

The method ends in an end point B.

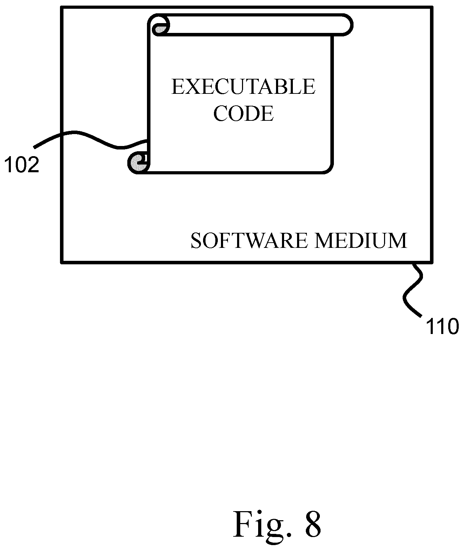

Fig. 8 schematically shows a non-transitory software medium 110 according to the invention. The software medium 110 comprises executable code 102 configured to, when executed, perform the method according to the invention, e.g. as described with respect to either the printer shown in Fig. 1 or the method shown in Fig. 7 and/or according to any of the variants and modifications of the printer and/or of the method described hereinbefore.

The non-transitory software medium 110 may, specifically, be formed as a CD or a CD-ROM, a DVD or a DVD-ROM, a Blu Ray disc or a Blu Ray-ROM disc, a magnetic hard drive, a solid state disk (SSD) hard drive, a USB memory device and so on.

## Claims

1. Method for predicting media deformation at the end of a printing process due to an interaction of print medium and liquid like water-based marking liquid or coating liquid, wherein the method comprises the steps of
a) receiving a print job for a printer with a plurality of print heads, the print job determining types of liquid, a type of print medium and a printer configuration to be used,
b) extracting liquid amounts for predetermined areas of at least one image taken from the print job,
c) providing the extracted liquid amounts together with the types of liquid, the type of print medium and the printer configuration as input for a simulation tool (SM),
d) the simulation tool (SM) simulating the interaction by modelling physical phenomena defining said interaction such as absorption, evaporation and diffusion giving a moisture profile for the print job as output,
e) a machine learning model (ML) receiving the moisture profile, the machine learning model (ML) trained with a training set of media deformation of test print jobs with a same printer configuration, same types of liquid and a same type of print medium, and
f) the machine learning model (ML) predicting the media deformation of the print job.

2. Method according to claim 1, wherein the method comprises the steps of creating from the print job an image with an N x M grid of tiles, wherein each tile contains a uniform amount of liquid for each print head of the printer.

3. Method according to any of the preceding claims, wherein the method comprises the step of creating the training set for training the machine learning model (ML) by printing at least one digital print job by a printer which includes a height camera in order to measure a deformation of a printed sheet of the at least one digital print job.

4. Method according to any of the preceding claims, wherein the machine learning model (ML) has a software and/or hardware architecture which is suitable for four-dimensional inputs and two-dimensional outputs.

5. A printer for printing print jobs on a print medium, the printer comprising a user interface and a print controller for storing the prediction results of the machine learning model achieved by a method according to any of the preceding claims, and an optimization tool for selecting a type of liquid, a type of print medium, a printer configuration, liquid amounts in non-printed areas and liquid amounts in printed areas which automatically or semi-automatically with user conformations via the user interface decreases a deformation of the print medium by judging and taking the stored prediction results of the machine learning model into account.

6. A printer according to claim 5, wherein the user conformations are related to a user warning to consider a hold of the print job, an advice to change an ink amount in an appropriate area of an image of the print job, an advice to consider to use another type of liquid, another type of print medium, or another printer configuration.

7. A computer program comprising instructions which, when the program is executed by a computer, cause the computer to carry out the steps of the method of any of the claims 1 to 4.
